# EUROPEAN PATENT APPLICATION

(11) **EP 4 751 871 A1**
(43) Date of publication of application: **03.06.2026**
(21) Application number: 24862472.8
(22) Date of filing: 30.07.2024
(51) Int. Cl.: B29B 7/80, G05B 19/418, G06Q 50/04

(54) **MANAGEMENT DEVICE**

(30) Priority: 05.09.2023 JP 2023143859
(71) Applicant: BRIDGESTONE CORPORATION, Chuo-ku Tokyo 104-8340 (JP)
(72) Inventor: SHIKANO, Kenta, Tokyo 104-8340 (JP); OZAWA, Yoichi, Tokyo 104-8340 (JP); HOJO, Masahiro, Tokyo 104-8340 (JP); UCHIYAMA, Toshihiro, Tokyo 104-8340 (JP); MATSUDA, Satoshi, Tokyo 104-8340 (JP); OGURA, Kenta, Tokyo 104-8340 (JP); FUKUSHIMA, Atsushi, Tokyo 104-8340 (JP); KATO, Daisuke, Tokyo 104-8340 (JP)
(74) Representative: Marks & Clerk LLP
(86) International application number: PCT/JP2024/027200
(87) International publication number: WO 2025/052818

(57) **Abstract**

A management device (10) includes an acquisition section (131) that acquires raw material information including environmental information of raw materials of the rubber product, characteristic information, which is information regarding characteristics including a compounding of the rubber product, and restriction information, which is information on restrictions related to an environmental response index required for the rubber product, a calculation section (132) that calculates the environmental response index of the rubber product based on the raw material information and the characteristic information, and a determination section (133) that determines, based on the restriction information, a combination of the raw materials used in each rubber compounding used for members forming the rubber product so that the restrictions related to the environmental response index in the manufacturing process of the rubber product are satisfied.

## Description

### TECHNICAL FIELD

The present disclosure relates to a management device. In particular, the present disclosure relates to a management device for managing a manufacturing process of a rubber product, for which sustainability is required.

### BACKGROUND

In recent years, in view of the prevention of global warming and the tightening of global energy supply and demand, it has become necessary to manage and improve the CO₂ emissions of products. For example, PTL 1 discloses a system that links energy and production information of processes or devices to calculate and manage CO₂ emissions for each product and lot.

### CITATION LIST

### Patent Literature

PTL 1: JP 2010-67114 A

### SUMMARY

### (Technical Problem)

Here, from the perspective of environmental protection, sustainability is also required for raw materials used in rubber products, and the replacement of materials derived from fossil resources with sustainable materials having low environmental impact, such as renewable materials, recycled materials, and biodegradable materials, is progressing. It is also required that information such as the sustainable rate of raw materials and what kind of sustainable materials are used be managed in a manner that can be utilized for business. The technology of PTL 1 does not manage sustainable materials and is specialized in information management within a single manufacturing site. Therefore, there is a need for a technology that manages environmental information such as sustainable rate and CO₂ emissions, while adjusting performance by combining multiple raw materials available from multiple manufacturers.

In view of these circumstances, an object of the present disclosure is to provide a management device capable of managing a manufacturing process of a rubber product in consideration of environmental information.

### (Solution to Problem)

(1) A management device according to one embodiment of the present disclosure is
   a management device that calculates an environmental response index, which is a value indicating the degree to which a rubber product is environmentally friendly, and manages a manufacturing process of the rubber product based on the environmental response index, the management device comprising:
   an acquisition section configured to acquire raw material information including environmental information on raw materials of the rubber product, characteristic information, which is information regarding characteristics including a compounding of the rubber product, and restriction information, which is information on restrictions related to an environmental response index required for the rubber product;
   a calculation section configured to calculate the environmental response index of the rubber product based on the raw material information and the characteristic information; and
   a determination section configured to determine, based on the restriction information, a combination of the raw materials used in each rubber compounding used for members forming the rubber product so that the restrictions related to the environmental response index in the manufacturing process of the rubber product are satisfied.
(2) In one embodiment of the present disclosure, in (1),
   the environmental information on the raw materials includes at least one of a sustainable rate, a CO₂ emission amount, and an energy consumption, and
   the environmental response index is at least one of a sustainable rate of the rubber product, a CO₂ emission amount of the rubber product, and an energy consumption of the rubber product.
(3) In one embodiment of the present disclosure, in (1) or (2),
   the manufacturing process includes a rubber kneading process and/or an extrusion process,
   the environmental response index is a sustainable rate of the rubber product, and
   the determination section is configured to determine a combination of the raw materials including rework rubber so that restrictions related to the sustainable rate of the rubber product in the rubber kneading process and/or the extrusion process are satisfied.
(4) In one embodiment of the present disclosure, in (1) or (2),
   the manufacturing process is a rubber kneading process,
   the environmental response index is a sustainable rate of the rubber product, and
   the determination section is configured to determine a combination of the raw materials including rework rubber so that restrictions related to the sustainable rate of the rubber product in the rubber kneading process are satisfied.
(5) In one embodiment of the present disclosure, in (3) or (4),
   information on a compounding of rubber material in at least the rubber kneading process is managed by a chemical marker, QR code^{®}, RFID, or barcode.

### (Advantageous Effect)

According to the present disclosure, it is possible to provide a management device capable of managing a manufacturing process of a rubber product in consideration of environmental information.

### BRIEF DESCRIPTION OF THE DRAWINGS

In the accompanying drawings:
FIG. 1 is a diagram illustrating an example configuration of a management device according to one embodiment of the present disclosure;
FIG. 2 is a diagram illustrating an example configuration of a management system including the management device of FIG. 1;
FIG. 3 is a diagram exemplifying raw material information;
FIG. 4 is a diagram exemplifying characteristic information;
FIG. 5 is a diagram exemplifying restriction information;
FIG. 6 is a flowchart exemplifying processing of a management method executed by the management device;
FIG. 7 is a diagram exemplifying the correspondence between tire performance and environmental targets and combinations of rubber members; and
FIG. 8 is a diagram exemplifying the kneading of rework rubber and new rubber.

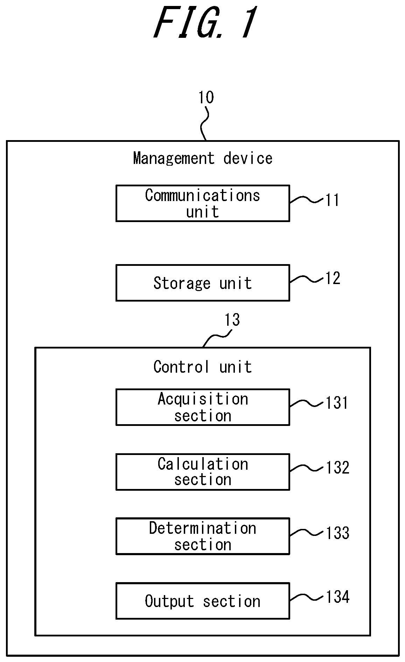

Hereinafter, the management device 10 (see FIG. 1) according to an embodiment of the present disclosure will be described with reference to the drawings. In each drawing, the same or corresponding parts are denoted by the same reference numerals. In the description of the present embodiment, explanations of the same or corresponding parts may be omitted or simplified as appropriate.

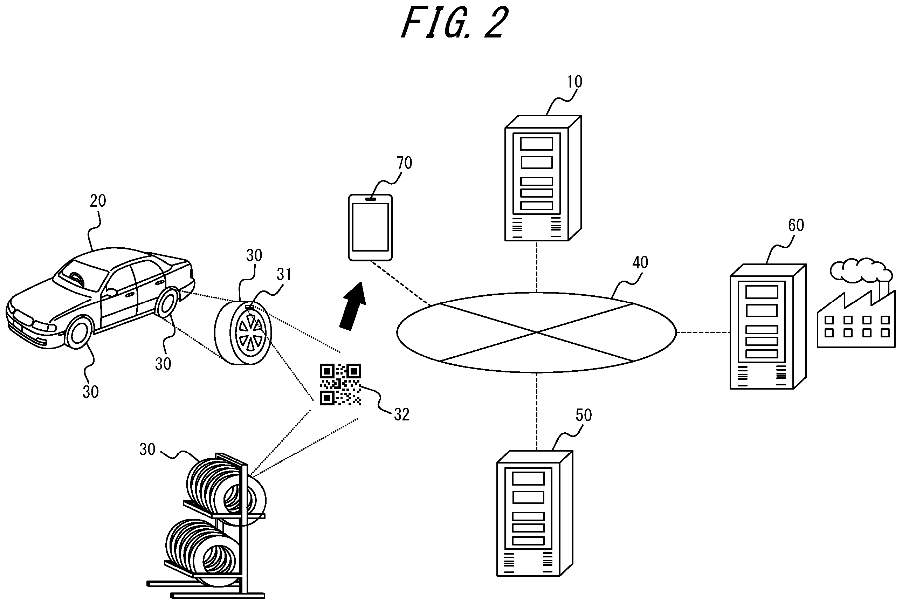

FIG. 1 illustrates an example configuration of the management device 10 according to the present embodiment. FIG. 2 illustrates an example configuration of a management system including the management device 10 of FIG. 1. The management device 10 calculates an environmental response index, which is a value indicating the degree to which a rubber product is environmentally friendly, and manages the manufacturing process of the rubber product based on the environmental response index. The environmental response index may be, for example, a numerical value indicating a sustainable rate of the rubber product, a CO₂ emission amount of the rubber product, or an energy consumption of the rubber product, or may be a ranking based on such numerical values. Details of the environmental response index will be described later. The rubber product may be, for example, a tire 30, seismic isolation rubber, or a crawler, but is not limited thereto. For tires 30, seismic isolation rubber, or crawlers, there is a particularly strong demand for sustainability. Hereinafter, the description will be given assuming that the rubber product is a tire 30. The tire 30 is for a vehicle 20 such as a passenger car, truck, or bus, but may also be for an aircraft or the like. The management system includes devices (such as computers) used by entities involved in the production and distribution of the supply chain of the tire 30. Here, the supply chain refers to a series of production and distribution processes until the rubber product such as the tire 30 reaches the consumer (user). The supply chain includes, for example, processes such as procurement of raw materials, manufacturing of rubber products, inventory management, retreading of tires whose tread has worn due to use, recycling of used tires, distribution, and sales. The distribution and sales in the supply chain also target materials derived from recycled used tires (such as crumb rubber, reclaimed rubber, pyrolysis oil, recycled carbon black, recycled steel cord, recycled organic fibers, etc.). In addition, the entities involved in the production and distribution of the rubber product supply chain include, for example, manufacturers of raw materials, manufacturers of rubber products, and purchasers of rubber products.

Conventionally, in the management of rubber product manufacturing, it has been common to combine the characteristic blending amounts of raw materials according to required specifications. The management device 10 according to the present embodiment can determine a combination of raw materials that satisfies restrictions of the environmental response index. The determination of the combination of raw materials includes determining the blending ratio of each raw material to be combined. The management device 10 according to the present embodiment can determine a combination of raw materials that satisfies restrictions while objectively evaluating the environmental friendliness of the rubber product, in addition to the required specifications. Further, by configuring the system with a group of devices in the supply chain as illustrated in FIG. 2, the management device 10 can obtain raw material information and characteristic information even for raw materials derived from recycling and rubber products using such raw materials.

Here, as described above, the sustainable rate of the tire 30 or the like can be used as the environmental response index. The sustainable rate of the tire 30 is, for example, the ratio of the weight of sustainable materials to the total weight of the tire 30, but as necessary, the ratio of the blending amount of sustainable materials to other materials or the like may be used. Not only for the tire 30 as a whole, but also for each raw material used in the tire 30, the sustainable rate can be obtained from the blending amount ratio or weight ratio of sustainable materials. In the present embodiment, the sustainable rate of a raw material is provided by the manufacturer of the raw material, but it is also possible for the management device 10 to calculate it. Sustainable materials refer to those among the materials of the tire 30 that are not derived from fossil resources. Sustainable materials are materials that are environmentally friendly, and include, for example, renewable materials, materials derived from recycling, and materials derived from biodegradation, but are not limited thereto. Renewable materials are renewable resources that can be used as materials for the tire 30, including, for example, bio-based materials, that is, materials derived from animals and plants. Materials derived from recycling are materials obtained through recycling. For materials derived from recycling, the method such as material recycling or chemical recycling is not limited. Materials derived from biodegradation are materials obtained from substances decomposed by the activity of microorganisms or the like.

The management device 10 includes a communications unit 11, a storage unit 12, and a control unit 13. The control unit 13 includes an acquisition section 131, a calculation section 132, a determination section 133, and an output section 134. The management device 10 may be configured as hardware by, for example, one or more computers. When the management device 10 is configured by a plurality of computers, the storage unit 12 may be a shared memory accessible by each computer. Details of the components of the management device 10 will be described later.

The management device 10 may constitute a management system together with a first server 50 and a second server 60 connected via a network 40. The network 40 is, for example, the Internet. The network 40 may also include, for example, a LAN (Local Area Network) in part. The management system may further include a terminal device 70 connected via the network 40.

Each of the first server 50 and the second server 60 is, for example, a computer different from the management device 10. In the present embodiment, the first server 50 is a computer of a supplier or manufacturer of raw materials supplying materials (raw materials) for the tire 30, and manages raw material information including information on the raw materials of the tire 30. In the present embodiment, the second server 60 is a computer of a tire manufacturer, which is the manufacturer of the tire 30, and manages characteristic information, which is information regarding characteristics including the compounding of the tire 30. The second server 60 also manages restriction information, which is information on restrictions related to the environmental response index required for the tire 30. The second server 60 may set and manage restriction information as the environmental performance of the tire 30 uniquely determined by the tire manufacturer. For example, for a product of the tire 30 with enhanced environmental performance, the second server 60 may set the restriction information so that the sustainable rate is 50% or more. The second server 60 may also set and manage restriction information in consideration of regional regulations required for the distribution or use of the tire 30. Information on regulations may be obtained from an information providing device (such as a computer of a national or local government) connected via the network 40. For example, if the sustainable rate of rubber products that can be distributed in a certain country is set to 30% or more, the second server 60 may set the restriction information so that the sustainable rate is 30% or more for all tires 30 sold in that country. The management device 10 can acquire or share raw material information, characteristic information, and restriction information via the network 40.

The terminal device 70 is, for example, a general-purpose mobile terminal such as a smartphone or tablet terminal, but is not limited to such mobile terminals as long as it is a device equipped with an imaging function. The terminal device 70 may be used by each worker when shipping the tire 30 from the factory, transporting it to the sales destination or warehouse, selling it to the user, or reusing it by retreading or recycling.

In the present embodiment, the tire 30 is provided with an indicator 31 including an identifier 32. The indicator 31 may be adhered to or printed on the tire 30. The terminal device 70 may capture the identifier 32 attached to the tire 30 using its imaging function and transmit the identifier 32 to the management device 10 via the network 40. The identifier 32 may be, for example, a two-dimensional code or the like. The identifier 32 is information that can identify each tire 30. For example, by means of the identifier 32, the model number of the tire 30 can be recognized, and the management device 10 can accurately obtain information such as the compounding of the tire 30 from the characteristic information. That is, when a rubber product is manufactured including recycled raw materials, the management device 10 can grasp information such as the compounding of the original tire 30 of the recycled raw materials via the identifier 32. Here, the identifier 32 is not limited to the indicator 31, and may be obtained from a transmitter such as an RFID (Radio Frequency Identification) attached to the tire 30 or a chemical marker. When the identifier 32 can be obtained from the RFID, indicator 31, or chemical marker provided in the tire 30, it is not necessary to require the worker to perform manual input or the like. Here, when RFID is used, the terminal device 70 is a reader device that performs short-range (several centimeters to several meters) wireless communication using an electromagnetic field, radio waves, or the like. Also, when RFID is used, the identifier 32 is a signal that can identify the tire 30 and is transmitted wirelessly.

Hereinafter, details of the components of the management device 10 will be described. The communications unit 11 includes one or more communication modules connected to the network 40. The communications unit 11 may include, for example, a communication module compatible with mobile communication standards such as 4G (4^{th} Generation) or 5G (5^{th} Generation). The communications unit 11 may include, for example, a communication module compatible with wireless or wired LAN standards.

The storage unit 12 is one or more memories. The memory may be, for example, a semiconductor memory, magnetic memory, or optical memory, but is not limited thereto and may be any memory. The storage unit 12 is, for example, built into the management device 10, but may be configured to be accessed externally by the management device 10 via any interface.

The storage unit 12 stores various data used in various calculations executed by the control unit 13. The storage unit 12 may also store results and intermediate data of various calculations executed by the control unit 13.

In the present embodiment, the storage unit 12 may store raw material information, characteristic information, and restriction information acquired via the communications unit 11.

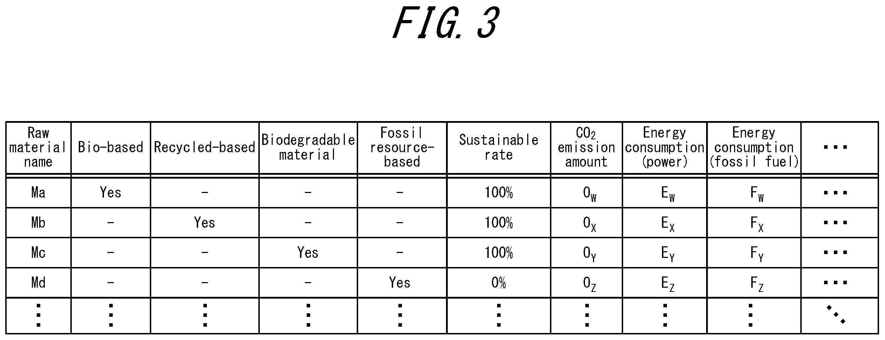

FIG. 3 illustrates an example of raw material information. The raw material information may be a table indicating what kind of material each raw material used in the manufacture of the tire 30 is. In the present embodiment, the raw material information includes environmental information of the raw materials of the tire 30. The environmental information of the raw materials includes at least one of a sustainable rate, a CO₂ emission amount, and an energy consumption. The energy consumption may include, for example, power consumption, fossil fuel consumption, and the like. In FIG. 3, the raw material information includes these environmental information items as examples, but may include only some of these environmental information items, or may further include other environmental information. Here, the CO₂ emission amount and energy consumption presented in FIG. 3 are the CO₂ emission amount and energy consumption generated in the manufacture of the raw materials, and may be, for example, the total CO₂ emission amount and total energy consumption per unit amount of raw material. In the present embodiment, the raw material information is provided by the manufacturer of the raw materials. The control unit 13 of the management device 10 may acquire raw material information from each manufacturer of the raw materials, aggregate it as a table as in FIG. 3, and store it in the storage unit 12.

First, regarding the classification of materials, in the example of FIG. 3, the raw material whose name is Ma (hereinafter referred to as raw material Ma) is a renewable material (for example, bio-based). The raw material Mb is derived from recycling. The raw material Mc is derived from biodegradation. The raw material Md is derived from fossil resources. In the example of FIG. 3, the raw materials Ma, Mb, and Mc correspond to sustainable materials. Furthermore, a column for the type of each raw material may be provided. In the type column, for example, types such as rubber, carbon black, zinc oxide, and the like may be described.

The sustainable rate is 100% for sustainable materials and 0% for non-sustainable materials. Here, if the raw material is a mixture of sustainable and non-sustainable materials, the sustainable rate corresponding to the blending ratio and weight may be indicated.

The CO₂ emission amount may be indicated per a certain amount (for example, 1 kg) of each raw material. The unit of CO₂ emission amount may be, for example, "kg-CO₂," but is not limited thereto. In the example of FIG. 3, for each raw material (Ma, Mb, Mc, Md), the CO₂ emission amounts (Ow, O_{X}, O_{Y}, O_{Z}) are indicated. In this case, the management device 10 can select the blending of raw materials while considering the CO₂ emission amount. Here, one raw material may be obtained from a plurality of suppliers. For example, the raw material Ma may be supplied by a plurality of producers (manufacturers), and the CO₂ emission amount may differ depending on the supplier. In such a case, data on the CO₂ emission amount for each supplier may be presented, and the management device 10 may be able to select the blending of raw materials and the supplier of raw materials while considering the CO₂ emission amount.

The energy consumption may be indicated as the consumption per a certain amount (for example, 1 kg) of each raw material. In the example of FIG. 3, the energy consumption includes power consumption (energy consumption (power)) and fossil fuel consumption (energy consumption (fossil fuel)). The unit of power consumption may be, for example, "kWh," but is not limited thereto. The unit of fossil fuel consumption may be, for example, "kg," but is not limited thereto. In the example of FIG. 3, for each raw material (Ma, Mb, Mc, Md), the power consumption (Ew, E_{X}, E_{Y}, E_{Z}) and fossil fuel consumption (Fw, F_{X}, F_{Y}, F_{Z}) are indicated. In this case, the management device 10 can select the blending of raw materials while considering the energy consumption. Here, one raw material may be obtained from a plurality of suppliers. For example, the raw material Ma may be supplied by a plurality of producers (manufacturers), and the energy consumption may differ depending on the supplier. In such a case, data on the energy consumption for each supplier may be presented, and the management device 10 may be able to select the blending of raw materials and the supplier of raw materials while considering the energy consumption.

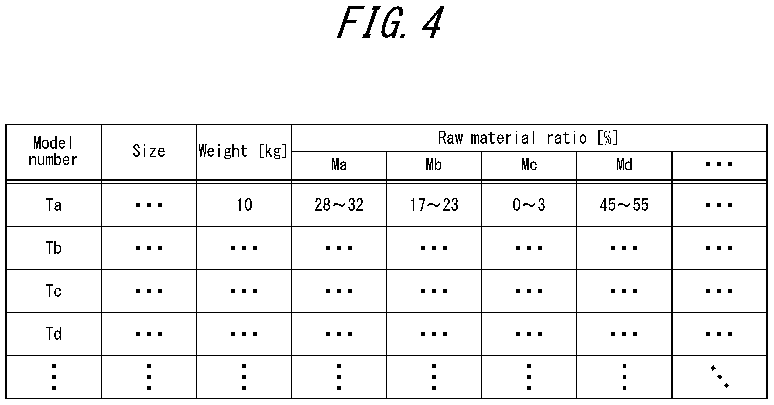

FIG. 4 illustrates an example of characteristic information. The characteristic information is information regarding characteristics including the compounding of the tire 30. The characteristic information may be a table including specifications and raw material ratios for each type (model number) of the tire 30. In the example of FIG. 4, the size and weight of the tire 30 are indicated, but the specifications of the tire 30 are not limited to these items. In the example of FIG. 4, for example, the tire 30 with model number Ta has a weight of 10 kg and is manufactured by blending the raw materials (Ma, Mb, Mc, Md) in the ratios indicated in FIG. 4. Here, the raw material ratio [%] is the weight ratio of the raw material to the total weight (10 kg) of the tire 30. However, it is not limited to the weight ratio, and any information indicating the compounding of raw materials as characteristic information may be obtained. In the example of FIG. 4, the raw material Ma is blended in the range of 28% to 32%. The raw material Mb is blended in the range of 17% to 23%. The raw material Mc is blended in the range of 0% to 3%. The raw material Md is blended in the range of 45% to 55%. Here, the manufacturing process of the tire 30 includes a rubber kneading process in which raw materials such as rubber and carbon black are mixed, a tread extrusion process in which rubber for the tread is extruded, a molding process in which a raw tire is molded together with bead and ply, and a vulcanization process in which vulcanization is performed. In the present embodiment, the manufacturing process of the tire 30 managed by the management device 10 is particularly the rubber kneading process. The management device 10, by processing of the calculation section 132 and the determination section 133 described later, determines a combination of raw materials in which the restrictions related to the environmental response index in the rubber kneading process are satisfied. At this time, the combination of raw materials is selected so that each raw material is within the range of the raw material ratio [%] indicated in FIG. 4. The characteristic information is not limited to a single table as in FIG. 4, and may be managed in different tables for each model number or size of the tire 30, for example. In the present embodiment, the characteristic information is provided by the manufacturer of the tire 30.

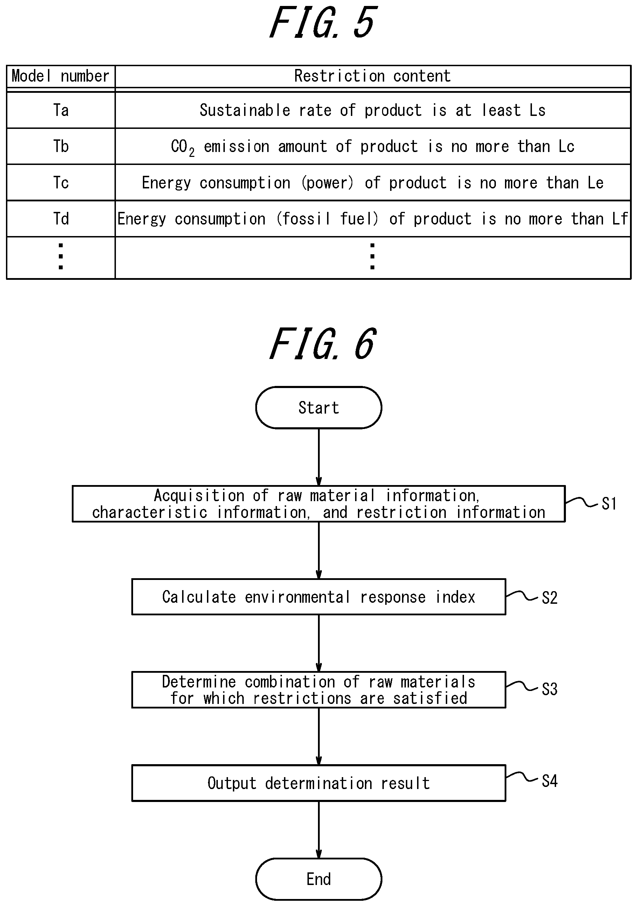

FIG. 5 illustrates an example of restriction information. In the example of FIG. 5, the environmental response index is the sustainable rate, CO₂ emission amount, and energy consumption of the tire 30. However, the environmental response index may be at least one of the sustainable rate of the tire 30, the CO₂ emission amount of the tire 30, and the energy consumption of the tire 30. In this case, the manufacturing process can be managed so that the tire 30 satisfying at least one restriction regarding the sustainable rate, CO₂ emission amount, and energy consumption is manufactured. The environmental response index may also be an evaluation value obtained by multiplying the sustainable rate, CO₂ emission amount, and energy consumption of the tire 30 by coefficients (weights) and adding them together. The environmental response index may also be a rank according to the sustainable rate of the product, the CO₂ emission amount of the product, the energy consumption of the product, a combination thereof, or an evaluation value. In the present embodiment, the restriction information is provided by the manufacturer of the tire 30.

In the example of FIG. 5, with respect to the environmental response index of the tire 30 having model number Ta, there is a restriction that the sustainable rate must be at least Ls. Further, with respect to the environmental response index of the tire 30 having model number Tb, there is a restriction that the CO₂ emission amount must be no more than Lc. Further, with respect to the environmental response index of the tire 30 having model number Tc, there is a restriction that the power consumption must be no more than Le. Further, with respect to the environmental response index of the tire 30 having model number Td, there is a restriction that the fossil fuel consumption must be no more than Lf. Here, the restriction information may include not only restrictions related to the environmental response index, but also restrictions related to the production plan of the tire 30 and the consumption plan of raw materials. For example, the restriction information may include, as a restriction, a lower limit on the number of tires 30 produced for each model number. Further, the restriction information may include, as a restriction, an upper limit on the number of tires 30 produced so that a specific raw material does not run short during production of the tire 30.

The control unit 13 is one or more processors. The processor may be, for example, a general-purpose processor or a dedicated processor specialized for specific processing, but is not limited thereto and may be any processor. The control unit 13 controls the overall operation of the management device 10.

Here, the management device 10 may have the following software configuration. One or more programs used to control the operation of the management device 10 are stored in the storage 12. When the program stored in the storage 12 is read by the processor of the control unit 13, the processor functions as the acquisition section 131, the calculation section 132, the determination section 133, and the output section 134.

The acquisition section 131 acquires raw material information, characteristic information, and restriction information. Further, the acquisition section 131 may acquire the identifier 32 (information capable of specifying the original tire 30 from which the recycled raw material is derived).

The calculation section 132 calculates the environmental response index of the tire 30 based on the raw material information and the characteristic information. For example, the calculation section 132 calculates the sustainable rate of the tire 30 based on the raw material information and the characteristic information. According to the characteristic information of FIG. 4, for example, the tire 30 having model number Ta has a weight of 10 kg and is formulated with raw material Ma in a range of 28% to 32% as a material. Further, raw materials Mb, Mc, and Md are formulated as materials in the ranges indicated in FIG. 4. According to the raw material information of FIG. 3, raw materials Ma and Mb are sustainable materials, and raw material Md is derived from fossil resources (non-sustainable material). For example, suppose that the tire 30 having model number Ta is manufactured by formulating raw materials Ma, Mb, Mc, and Md at 30%, 20%, 0%, and 50%, respectively. The calculation section 132 calculates the sustainable rate as 50%, which is the ratio of the weight of sustainable materials (3 kg + 2 kg) to the weight of the tire 30 (10 kg) for the tire 30 manufactured with this compounding. In the present embodiment, the calculation section 132 calculates the sustainable rate corresponding to combinations of raw material ratios while varying the raw material ratios. Here, the calculation section 132 may calculate the sustainable rate for all combinations of raw material ratios, or may calculate the sustainable rate for representative combinations (for example, combinations using the lower limit value, median value, and upper limit value of the range of each raw material ratio). Further, the calculation section 132 may first calculate the sustainable rate for representative combinations, and if the restriction related to the environmental response index is not satisfied in the processing by the determination section 133 described later, may calculate the sustainable rate for non-representative combinations and output it to the determination section 133.

For example, the calculation section 132 calculates the CO₂ emission amount of the tire 30 using the CO₂ emission amount in the raw material information and the characteristic information. The CO₂ emission amount of the tire 30 may be calculated by converting the CO₂ emission amount of FIG. 3, based on the raw material ratios, to a value corresponding to the weight of the raw materials to be formulated, and summing the converted values for all raw materials to be formulated. Here, when the raw materials can be obtained from multiple suppliers and it is possible to select from which supplier to obtain them, the calculation section 132 may calculate a conditional CO₂ emission amount (CO₂ emission amount for each selection). In this way, the calculation section 132 calculates the CO₂ emission amount corresponding to combinations of raw material ratios. Further, as in the case of the sustainable rate, if the restriction related to the environmental response index is not satisfied in the processing by the determination section 133 described later, the calculation section 132 may calculate the CO₂ emission amount for non-representative combinations and output it to the determination section 133.

For example, the calculation section 132 calculates the energy consumption of the tire 30 using the energy consumption in the raw material information and the characteristic information. In the present embodiment, the energy consumption includes power consumption and fossil fuel consumption. The calculation of the energy consumption of the tire 30 may be performed by a method similar to the calculation of the CO₂ emission amount described above. That is, the energy consumption of the tire 30 may be calculated by converting the energy consumption of FIG. 3, based on the raw material ratios, to a value corresponding to the weight of the raw materials to be formulated, and summing the converted values for all raw materials to be formulated. Further, a conditional energy consumption (energy consumption for each selection) may be calculated. Further, if the restriction related to the environmental response index is not satisfied in the processing by the determination section 133 described later, the calculation section 132 may calculate the energy consumption for non-representative combinations and output it to the determination section 133.

The determination section 133 determines, based on the restriction information, a combination of raw materials for which the restrictions related to the environmental response index in the manufacturing process of the tire 30 are satisfied. For example, the determination section 133 recognizes from the restriction information (see FIG. 5) that the sustainable rate of the tire 30 having model number Ta must be at least Ls. The determination section 133 extracts, as a determination result, combinations of raw materials for which the sustainable rate of the environmental response index received from the calculation section 132 is at least Ls. When the restriction related to the sustainable rate is satisfied by multiple combinations of raw materials, the determination section 133 may extract a predetermined number of combinations of raw materials in order from the highest sustainable rate as the determination result. Further, when the restriction related to the sustainable rate is not satisfied by representative combinations of raw materials, the determination section 133 may cause the calculation section 132 to calculate the sustainable rate for non-representative combinations and execute processing to again determine combinations of raw materials for which the restriction is satisfied. Further, for example, the determination section 133 similarly determines combinations of raw materials for which the restrictions related to the environmental response index are satisfied with respect to restrictions related to the CO₂ emission amount or energy consumption. Here, when the restriction related to the CO₂ emission amount or energy consumption is satisfied by multiple combinations of raw materials, the determination section 133 may extract a predetermined number of combinations of raw materials in order from the lowest CO₂ emission amount or energy consumption as the determination result. Further, when the restriction related to the CO₂ emission amount or energy consumption is not satisfied by representative combinations of raw materials, the determination section 133 may cause the calculation section 132 to calculate the CO₂ emission amount or energy consumption for non-representative combinations and execute the determination processing again.

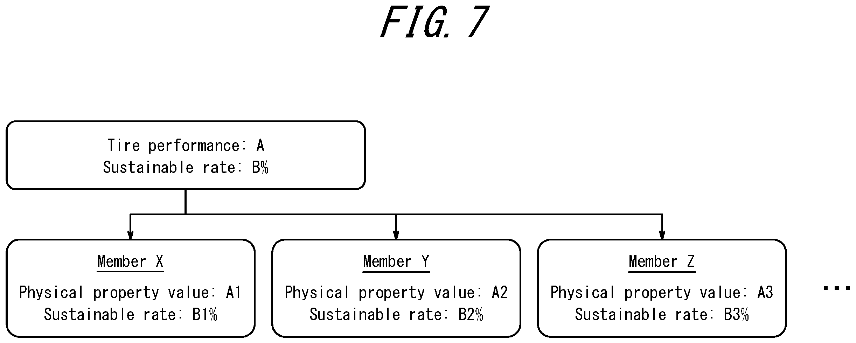

Further, the determination section 133 may determine, so that the restrictions related to the environmental response index are satisfied, combinations of raw materials used in each rubber compounding used for members forming the tire 30. Here, in the manufacture of the tire 30, there may be environmental targets such as a sustainable rate of 50% in addition to performance (such as running performance) as the tire 30. In order for the performance and environmental targets to be satisfied, it is necessary that appropriate physical property values (performance) and sustainable rates are satisfied in each rubber compounding when manufacturing each rubber member forming the tire 30. Here, the rubber members forming the tire 30 include, for example, the tread, side, and inner liner. For example, FIG. 7 is a diagram illustrating an example correspondence between the performance and environmental targets of the tire 30 and combinations of the rubber members. For example, the member X in FIG. 7 may correspond to the tread, the member Y to the side, and the member Z to the inner liner. When the tire performance is, for example, running performance, the physical property value may be any value related to running performance, and may include, for example, hardness.

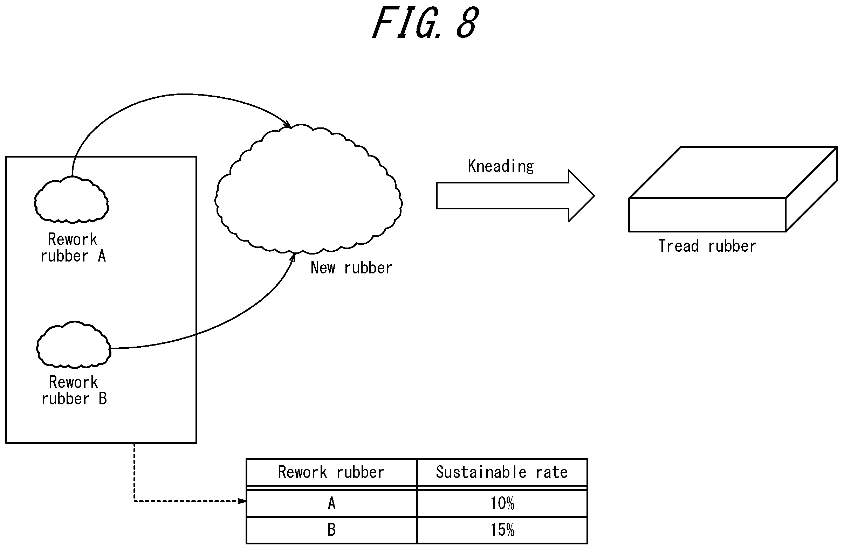

Here, in the rubber kneading process, rework rubber is kneaded into new rubber. For example, as illustrated in FIG. 8, rework rubber having different sustainable rates is kneaded with new rubber and may be used as tread rubber, for example. Further, even in the extrusion process, for example, rework rubber may be mixed and used before extruding the rubber. Here, rework rubber refers to all waste rubber or recirculated rubber generated in the factory. Rework rubber includes rubber scraps generated in the tire manufacturing process, for example, when forming a rubber sheet continuously, including portions cut out from the rubber sheet delivered from the calender roll. Further, rework rubber includes recirculated rubber generated in the factory, such as rubber that did not meet management standards or quality standards, deformed unvulcanized members, and rubber obtained from tires. Rework rubber may be returned to the refining process, which is an initial process in the tire manufacturing process, or may be used in the process in which the rework rubber was generated. Then, due to the use of rework rubber and the like, the compounding of the rubber material before mixing in the rework rubber (that is, the sustainable rate) may change. Such changes in compounding are preferably managed using, for example, chemical markers, QR codes^{®} (QR code is a registered trademark in Japan, other countries, or both), RFID, or barcodes. For example, the rubber kneaded in the rubber kneading process may be managed in units of batches. An RFID or barcode may be associated with a batch of rubber kneaded at a certain date and time, and information about the batch of rubber may be managed so as to be linked to individual identification information obtained from the RFID or barcode. The information linked to the individual identification information includes, for example, the compounding of the rubber material, but is not particularly limited as long as it is information used for the combination of raw materials by the determination section 133. That is, it is sufficient that at least the information on the compounding of the rubber material in the rubber kneading process is managed by a chemical marker, QR code^{®}, RFID, or barcode. This makes it possible to manage the tire manufacturing process, such as the rubber kneading process and the extrusion process, taking into account the influence of rework rubber and the like. Here, in the calculation of component content or sustainable rate and the like based on the compounding of the rubber material, since the number of decimal places may become enormous in strict calculation, for example, processing may be performed to round down to the first decimal place. Further, in the calculation of component content or sustainable rate and the like, since many past generations may be used in the calculation and the calculation may become complicated, for example, processing may be performed to discard generations earlier than three generations ago (three batches before).

Here, in the above example, environmental information and the like of raw materials are stored and managed in the storage 12. As another example of management, such environmental information and the like may be managed in a distributed manner. For example, environmental information and the like may be stored and managed using blockchain technology. Further, a storage area (cloud) on the network 40 may be used.

The output section 134 outputs the determination result by the determination section 133 to a display device or the like. The display device includes, for example, a display that can be viewed by a user of the management system. The user may be, for example, a production manager of the tire 30 at a tire manufacturer. Further, for example, a display connected to the second server 60 may function as a display device for presenting the determination result.

FIG. 6 is a flowchart illustrating an example of the processing of the management method executed by the control unit 13 of the management device 10. In this example, the manufacturing process managed by the management device 10 is the rubber kneading process. Further, the environmental response index is the sustainable rate of the tire 30. Further, the determination section 133 determines a combination of raw materials including rework rubber so that the restriction related to the sustainable rate of the tire 30 in the rubber kneading process is satisfied.

The acquisition section 131 acquires raw material information, characteristic information, and restriction information (step S1).

The calculation section 132 calculates the environmental response index of the tire 30 based on the raw material information and the characteristic information (step S2).

The determination section 133 determines a combination of raw materials for which the restriction information is satisfied (step S3).

The output section 134 outputs the determination result to a display device or the like (step S4). The production manager of the tire 30 may create or modify a production plan based on the determination result. By these processes, it becomes possible to manage the rubber kneading process taking into account the environmental information of rework rubber.

As described above, the management device 10 according to the present embodiment, by the above configuration, can manage the manufacturing process of rubber products for which sustainability is required, taking into account the environmental information of raw materials such as CO₂ emission amount and sustainable rate.

The embodiments of the present disclosure have been described above with reference to the drawings and examples, but it should be noted that those skilled in the art can easily make various modifications or alterations based on the present disclosure. Therefore, it should be understood that such modifications or alterations are included within the scope of the present disclosure. For example, the functions included in each component and the like can be rearranged so as not to be logically inconsistent, and a plurality of components and the like can be combined into one or divided. The embodiments according to the present disclosure can also be realized as a method executed by a processor provided in an apparatus, a program, or a storage medium recording the program. It should be understood that these are also included within the scope of the present disclosure.

### REFERENCE SIGNS LIST

- 10: Management device
- 11: Communications unit
- 12: Storage unit
- 13: Control unit
- 20: Vehicle
- 30: Tire
- 31: Indicator
- 32: Identifier
- 40: Network
- 50: First server
- 60: Second server
- 70: Terminal device
- 131: Acquisition section
- 132: Calculation section
- 133: Determination section
- 134: Output section

## Claims

1. A management device configured to calculate an environmental response index, which is a value indicating a degree to which a rubber product is environmentally friendly, and manage a manufacturing process of the rubber product based on the environmental response index, the management device comprising:
an acquisition section configured to acquire raw material information including environmental information on raw materials of the rubber product, characteristic information, which is information regarding characteristics including a compounding of the rubber product, and restriction information, which is information on restrictions related to an environmental response index required for the rubber product;
a calculation section configured to calculate the environmental response index of the rubber product based on the raw material information and the characteristic information; and
a determination section configured to determine, based on the restriction information, a combination of the raw materials used in each rubber compounding used for members forming the rubber product so that the restrictions related to the environmental response index in the manufacturing process of the rubber product are satisfied.

2. The management device according to claim 1, wherein
the environmental information on the raw materials includes at least one of a sustainable rate, a CO₂ emission amount, and an energy consumption, and
the environmental response index is at least one of a sustainable rate of the rubber product, a CO₂ emission amount of the rubber product, and an energy consumption of the rubber product.

3. The management device according to claim 1 or 2, wherein
the manufacturing process includes a rubber kneading process and/or an extrusion process,
the environmental response index is a sustainable rate of the rubber product, and
the determination section is configured to determine a combination of the raw materials including rework rubber so that restrictions related to the sustainable rate of the rubber product in the rubber kneading process and/or the extrusion process are satisfied.

4. The management device according to claim 1 or 2, wherein
the manufacturing process is a rubber kneading process,
the environmental response index is a sustainable rate of the rubber product, and
the determination section is configured to determine a combination of the raw materials including rework rubber so that restrictions related to the sustainable rate of the rubber product in the rubber kneading process are satisfied.

5. The management device according to claim 3 or 4, wherein information on a compounding of rubber material in at least the rubber kneading process is managed by a chemical marker, QR code^{®}, RFID, or barcode.
